# EUROPÄISCHE PATENTSCHRIFT

(11) **EP 2 431 149 B1**
(45) Veröffentlichungstag und Bekanntmachung des Hinweises auf die Patenterteilung: **22.08.2018**
(21) Anmeldenummer: 11007557.9
(22) Anmeldetag: 16.09.2011
(51) Int. Cl.: B29C 45/00, B29C 45/14, B29D 99/00, B29C 69/00, F16J 15/02

(54) **Verfahren zur Herstellung einer Dichtung**
Method for the manufacture of a seal
Procédé de fabrication d'un joint

(30) Priorität: 17.09.2010 DE 102010045672
(43) Veröffentlichungstag der Anmeldung: 21.03.2012
(73) Patentinhaber: Carl Freudenberg KG, 69469 Weinheim (DE)
(72) Erfinder: Kohn, Jason, 69493 Hirschberg-Leutershausen (DE); Trabert, Jens, 69469 Weinheim (DE)

(56) Entgegenhaltungen:
- DE-A1- 2 619 015
- DE-U1-202008 011 032
- US-A- 5 297 805

## Beschreibung

### Technisches Gebiet

Die Erfindung betrifft ein Verfahren zur Herstellung mehrerer Dichtungen in einem gemeinsamen Werkzeug.

### Stand der Technik

Ein Verfahren zur Herstellung nur einer Dichtung ist aus der DE 26 19 015 A1 bekannt. Die Dichtung umfasst einen Dichtring und einen Gleitring, wobei der Gleitring auf der einer abzudichtenden Fläche zugewandten Seite des Dichtrings angeordnet ist und wobei der Dichtring und der Gleitring einstückig ausgebildet sind, wobei in einem ersten Verfahrensschritt ein zylindrischer Rohrabschnitt aus einem polymeren Werkstoff des Gleitrings in die Werkzeugkavität eines Herstellungswerkzeugs eingelegt und in seiner Position gehalten wird. Der Gleitring ist ein flexibles, nicht-elastomeres Teil, wobei der Dichtring als Formrohling aus einem elastomeren Werkstoff in eine Pressform oder in eine Spritzpressform eingebracht wird. Diese Form wird geschlossen, um das nicht-elastomere Teil zu einem eine Dichtlippe aufweisenden Dichtelement der gewünschten Form zu formen, den Formrohling in einen elastomeren Dichtungskörper der gewünschten Gestalt umzuformen und gleichzeitig das geformte Dichtelement mit dem elastomeren Dichtungs-Formstück durch eine Haftverbindung zu verbinden.

Aus der US 5,297,805 ist eine Dichtung bekannt, umfassend einen Dichtring und einen Gleitring, wobei der Gleitring auf der einer abzudichtenden Fläche zugewandten Seite des Dichtrings angeordnet ist und wobei der Dichtring und der Gleitring einstückig ausgebildet sind. Der Dichtring besteht aus einem elastomeren Werkstoff, der Gleitring aus einem polymeren Werkstoff mit einem Reibungskoeffizient, der kleiner als der Reibungskoeffizient des elastomeren Werkstoffs des Dichtrings ist. Der Gleitring besteht aus einem PTFE-Werkstoff.

Aus der DE 20 2008 011 032 U1 ist eine Gleitringdichtungsanordnung bekannt, umfassend einen stationären Gleitring mit einer ersten Gleitfläche, einen rotierenden Gleitring mit einer zweiten Gleitfläche, wobei sich der rotierende Gleitring gemeinsam mit einem rotierenden Bauteil dreht, wobei die Gleitflächen der Gleitringe einander gegenüberliegen und zwischen sich einen Dichtspalt definieren und eine Nebendichtung, welche an einem der Gleitringe eine Abdichtung an einem Nebendichtspalt zwischen dem Gleitring und einem weiteren Bauteil bereitstellt, wobei die Nebendichtung ringförmig ausgebildet ist und wobei die Nebendichtung aus einem Material hergestellt ist, welches in Axialrichtung Bereiche unterschiedlicher Steifigkeit aufweist.

Wie zuvor ausgeführt, sind zweiteilig ausgebildete Dichtungen allgemein bekannt. Der Dichtring besteht beispielsweise aus einem elastomeren Werkstoff und ist ein O-Ring. Der Gleitring besteht demgegenüber aus einem polymeren Werkstoff, beispielsweise aus PTFE, wobei der Gleitring die abzudichtende Fläche des abzudichtenden Maschinenelements dichtend umschließt. Der Dichtring und der Gleitring werden jeweils separat hergestellt. Die Einbaunut im Gehäuse, in dem die Dichtung angeordnet ist, ist durch den Dichtring abgedichtet. Der Dichtring ist unter elastischer Vorspannung dichtend zwischen dem Nutgrund der Einbaunut und dem Gleitring angeordnet. Bei einer solchen vorbekannten Dichtung ist von Nachteil, dass diese aufwendig und teuer in der Herstellung ist. Außerdem ist die Montage einer solchen Dichtung vergleichsweise kompliziert, weil das Gehäuse, in dem die Einbaunut angeordnet ist, für die Montage der Dichtung mehrteilig ausgebildet sein muss. Dieses mehrteilige Gehäuse ist deshalb notwendig, weil der Gleitring der vorbekannten Dichtung wenig elastisch ist und sich deshalb während der Montage der Dichtung nicht in ausreichendem Maße elastisch nachgiebig verformen lässt.

### Darstellung der Erfindung

Der Erfindung liegt die Aufgabe zu Grunde, ein Verfahren zur Herstellung einer Dichtung derart weiter zu entwickeln, dass dieses einfach und kostengünstig durchführbar ist und dass die damit hergestellten Dichtungen eine ausreichend große elastische Nachgiebigkeit aufweisen, um in einteiligen Einbaunuten von Maschinenelementen montiert werden zu können.

Diese Aufgabe wird erfindungsgemäß durch ein Verfahren gemäß Anspruch 1 gelöst. Auf vorteilhafte Weiterbildungen des Verfahrens nehmen die Unteransprüche Bezug.

Zur Lösung der Aufgabe ist das erste Verfahren zur Herstellung mehrerer Dichtungen in einem gemeinsamen Werkzeug vorgesehen, wobei jede Dichtung einen Dichtring und einen Gleitring umfasst, wobei der Gleitring auf der einer abzudichtenden Fläche zugewandten Seite des Dichtrings angeordnet ist und wobei der Dichtring und der Gleitring einstückig ausgebildet sind, erfolgt derart dass in einem ersten Verfahrensschritt ein zylindrischer Rohrabschnitt aus dem polymeren Werkstoff des Gleitrings in die Werkzeugkavität eines Herstellungswerkzeugs eingelegt und in seiner Position gehalten wird, wobei die Werkzeugkavität der Anzahl der herzustellenden Dichtungen entsprechende, axial benachbart zueinander angeordnete und strömungsleitend miteinander verbundene Teilkavitäten aufweist, wobei der Rohrabschnitt alle Teilkavitäten jeweils in radialer Richtung in einen Gleitring-Hohlraum und in einen Dichtring-Hohlraum unterteilt, die einander in radialer Richtung benachbart zugeordnet sind, wobei der Rohrabschnitt eine axiale Breite aufweist, die im Wesentlichen der axialen Weite der Werkzeugkavität und der Summe der axialen Breite aller in den Teilkavitäten herzustellenden Dichtungen entspricht, dass in einem zweiten Verfahrensschritt elastomerer Werkstoff in die Dichtring-Hohlräume eingepresst wird, derart, dass der elastomere Werkstoff die Dichtring-Hohlräume vollständig ausfüllt und den Rohrabschnitt radial in die Gleitring-Hohlräume umformt, bis der Rohrabschnitt die die Gleitring-Hohlräume begrenzenden Wandungen anliegend berührt, dass die herstellungsbedingt nach dem zweiten Verfahrensschritt noch zusammenhängenden Dichtungen anschließend in einem dritten Verfahrensschritt gemeinsam aus dem Herstellungswerkzeug entformt und in einem vierten Verfahrensschritt voneinander getrennt werden.

Hierbei ist von Vorteil, dass praktisch gleichzeitig mehrere Dichtungen hergestellt werden können, die abhängig von der Gestalt der Werkzeugkavität, entweder gleich oder unterschiedlich gestaltet sind. Im zweiten Verfahrensschritt werden durch einmaliges Einspritzen alle Teilkavitäten mit elastomerem Werkstoff gefüllt. Im vierten Verfahrensschritt werden die noch zusammenhängenden Dichtungen bevorzugt durch Schneiden voneinander getrennt, weiter bevorzugt durch Laserschneiden. Die Durchführung des Verfahrens zur Herstellung der Dichtungen ist einfach, schnell und deshalb auch kostengünstig durchführbar.

Zwischen dem dritten und dem vierten Verfahrensschritt können auf der dem Dichtring abgewandten Seite des Gleitrings eine reibungsverringernde Oberflächenprofilierung und/oder Oberflächenbeschichtung aufgebracht werden. Ohne weiteren Aufwand kann die Reibung zwischen den Dichtungen und den jeweils abzudichtenden Flächen dadurch während der bestimmungsgemäßen Verwendung der Dichtungen weiter reduziert werden.

Die nach dem zuvor beschriebenen Verfahren hergestellten Dichtungen umfassen einen Dichtring und einen Gleitring, wobei der Gleitring auf der einer abzudichtenden Fläche zugewandten Seite des Dichtrings angeordnet ist, wobei der Dichtring und der Gleitring einstückig ausgebildet sind.

Bereits durch die einstückige Ausbildung von Dichtring und Gleitring sind die Herstellung und die Montage der Dichtung vereinfacht. Die Gefahr von Montagefehlern bei Montage der Dichtung in den Einbauraum ist durch die Einstückigkeit auf ein Minimum reduziert.

Der Dichtring kann aus einem elastomeren Werkstoff bestehen. Derartige Werkstoffe für Dichtringe sind allgemein bekannt und mit unterschiedlichen Spezifikationen für viele Anwendungsfälle kostengünstig verfügbar.

Der Gleitring kann aus einem polymeren Werkstoff bestehen, mit einem Reibungskoeffizient, der kleiner ist als der Reibungskoeffizient des elastomeren Dichtrings ist. Als polymere Werkstoffe für den Gleitring können zum Beispiel PTFE-Werkstoffe oder PEEK-Werkstoffe zur Anwendung gelangen. Die genannten Werkstoffe haben einen deutlich geringeren Reibungskoeffizient als der elastomere Werkstoff, aus dem der Dichtring besteht. Gleitringe aus diesen Werkstoffen weisen gleichbleibend gute Gerbrauchseigenschaften während einer langen Gebrauchsdauer auf. Das ist im Hinblick auf hohe Standzeiten der Dichtung von hervorzuhebendem Vorteil.

Der Gleitring kann folienartig ausgebildet sein, wobei der Gleitring bevorzugt eine Dicke aufweisen kann, die 0,1 mm bis 1,0 mm beträgt. Durch die geringe Dicke des Gleitrings ist die Dichtung insgesamt, insbesondere in der radialer Richtung, elastisch nachgiebig, und trotz des Gleitrings besteht die Möglichkeit, die Dichtung durch elastische Verformung in einteilige Einbauräume von Maschinenelementen einzufügen, genauso, wie das bei Dichtungen möglich ist, die ausschließlich aus elastomeren Werkstoffen bestehen, wie beispielsweise herkömmliche O-Ringe.

Nach einer vorteilhaften Ausgestaltung kann es vorgesehen sein, dass der Gleitring im Wesentlichen die gesamte axiale Breite des Dichtrings überdeckt. Die große Kontaktfläche zwischen dem Dichtring und dem Gleitring bewirkt eine ausgezeichnete Haltbarkeit der beiden Teile aneinander. Der Gleitring bildet dadurch auf der der abzudichtenden Fläche zugewandten Seite des Dichtrings praktisch eine Ummantelung desselben. In den Bereichen, in denen der Gleitring die abzudichtende Fläche dichtend berührt, befinden sich keine Trennfugen zwischen dem Dichtring und dem Gleitring; auch während einer langen Gebrauchsdauer der Dichtung besteht dadurch nicht die Gefahr, dass sich der Dichtring und der Gleitring voneinander lösen.

Der Gleitring berührt den Dichtring im Bereich der Kontaktfläche vollständig anliegend.

Es kann beispielsweise vorgesehen sein, dass der Gleitring im Wesentlichen halbkreisförmig und radial in Richtung der abzudichtenden Fläche vorgewölbt ausgebildet ist. Die Dichtung hat dann die Form eines sogenannten D-Rings, wobei die gesamte halbkreisförmige Vorwölbung durch den folienartigen Gleitring gebildet ist.
Davon abweichende Geometrien sind ebenfalls möglich.

Zur weiteren Reduzierung der Reibung zwischen dem Gleitring und einer abzudichtenden Fläche während der bestimmungsgemäßen Verwendung der Dichtung kann es vorgesehen sein, dass der Gleitring auf der dem Dichtring abgewandten Seite eine reibungsverringernde Oberflächenprofilierung und/oder Oberflächenbeschichtung aufweist.

Der Gleitring und der Dichtring sind bevorzugt stoffschlüssig miteinander verbunden. Eine solche stoffschlüssige Verbindung ist auch während einer langen Gebrauchsdauer haltbar.

Im Vergleich zu Dichtungen, die keinen Gleitring aufweisen, beispielsweise herkömmliche O-Ring-Dichtringe, ist die Reibkraft durch Verwendung der erfindungsgemäßen Dichtung bei den selben Randbedingungen höchstens halb so groß, so dass bei gleich guter Montierbarkeit und praktisch ähnlich einfacher Herstellung unerwünschte Stick-Slip-Effekte zuverlässig vermieden werden.

### Kurzbeschreibung der Zeichnungen

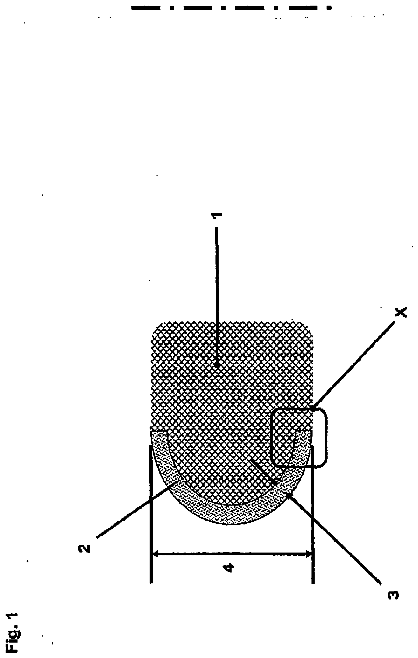

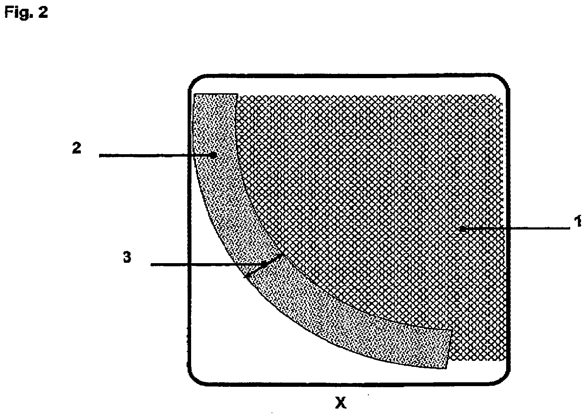

Ein Ausführungsbeispiel einer erfindungsgemäß hergestellten Dichtung ist nachfolgend an Hand der Figuren 1 und 2 näher beschrieben.

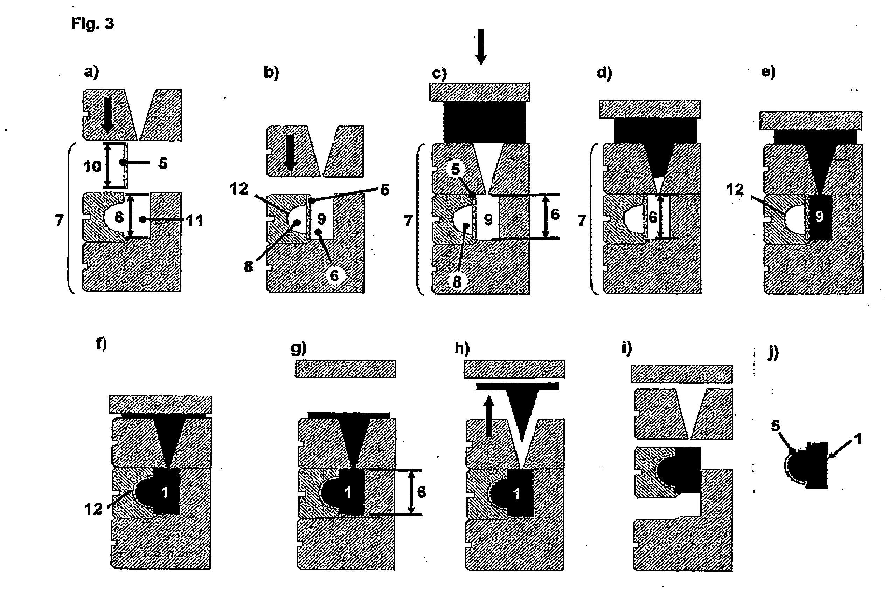

Ein Verfahren zur Herstellung einer solchen Dichtung ist in Figur 3 dargestellt.

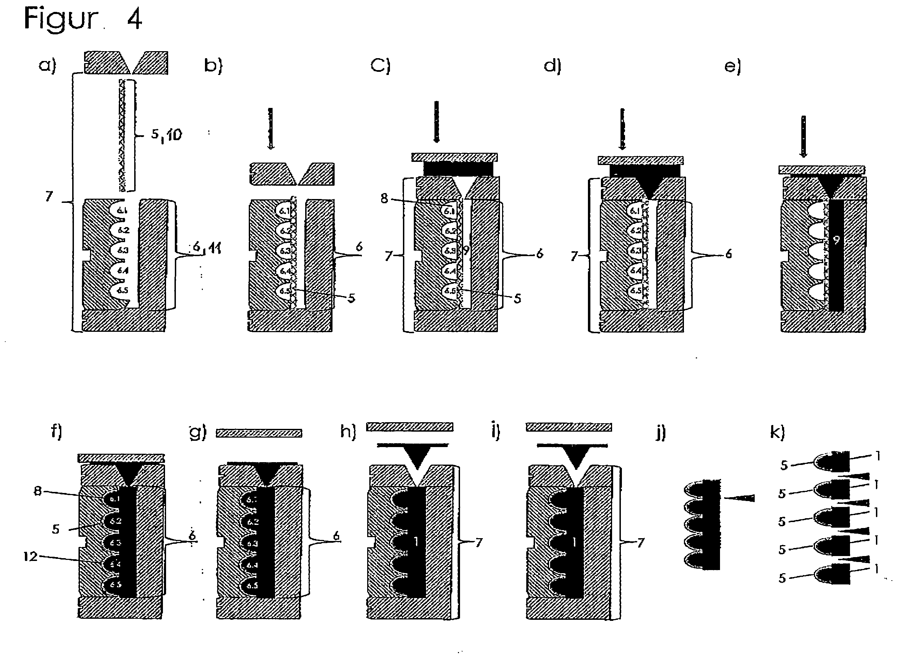

Das erfindungsgemäße Verfahren zur praktisch gleichzeitigen Herstellung von mehreren erfindungsgemäßen Dichtungen ist in Figur 4 dargestellt.

### Ausführung der Erfindung

In Figur 1 ist ein Schnitt durch eine Dichtung gezeigt.
Die Dichtung umfasst einen Dichtring 1 und einen Gleitring 2, die einstückig ausgebildet sind. Der Gleitring 2 kann radial innen oder radialer außen am Dichtring 1 angeordnet sein, wobei der Dichtring 1 und der Gleitring 2 stoffschlüssig miteinander verbunden sind.

Das Verfahren zur Herstellung dieser Dichtung wird später mit Bezug auf die Figuren 3 und 4 näher erläutert.

Der Dichtring 1 und der Gleitring 2 bestehen aus voneinander abweichenden Werkstoffen. Der Dichtring 1 besteht aus einem elastomeren Werkstoff, der Gleitring 2 demgegenüber in dem hier gezeigten Ausführungsbeispiel aus PTFE. Der Werkstoff des Gleitrings sorgt dafür, dass die Dichtung ohne nennenswerten Widerstand über die abzudichtende Fläche gleitet. Die abzudichtende Fläche kann beispielsweise durch eine translatorisch hin- und her bewegbare Stange gebildet sein, die in einem Zylinder angeordnet ist. Der Einbauraum wäre in einem solchen Fall zum Beispiel durch eine Einbaunut in dem Zylinder gebildet, wobei die Einbaunut radial in Richtung der abzudichtenden Stange offen wäre.

Der Gleitring 2 weist nicht nur einen geringen Reibungskoeffizient auf, sondern ist auch folienartig dünn ausgebildet. Entscheidend bei der Dichtung ist, dass sie elastisch derart verformbar ist, insbesondere in radialer Richtung elastisch aufweitbar ist, dass sie auch in einteilige Einbaunuten montierbar ist. Das wird durch den folienartig dünnen Gleitring bewirkt, der praktisch eine Elastizität aufweist, die im Wesentlichen der Elastizität des Dichtrings entspricht. Um eine solche Elastizität der Dichtung zu gewährleisten, weist der Gleitring 2 im hier gezeigten Ausführungsbeispiel eine Dicke 3 auf, die 0,2 mm beträgt.

Der Gleitring 2 erstreckt sich über die gesamte axiale Breite 4 des Dichtrings und ist in diesem Ausführungsbeispiel halbkreisförmig und radial in Richtung der abzudichtenden Fläche vorgewölbt ausgebildet.

In Figur 2 ist der vergrößerte Ausschnitt "X" vergrößert dargestellt.
Die stoffschlüssige Verbindung zwischen dem Dichtring 1 und dem Gleitring 2 ist hier zu sehen. Der Dichtring 1 und der Gleitring 2 sind einstückig und unverlierbar miteinander verbunden.

In Figur 3 ist ein Verfahren zur Herstellung der zuvor beschriebenen Dichtung in schematische Darstellung gezeigt.

In Figur 3 a ist ein zylindrischer Rohrabschnitt 5 gezeigt, der im hier gezeigten Ausführungsbeispiel aus PTFE besteht und der später den Gleitring der Dichtung bildet. Die Werkzeugkavität 6 des Herstellungswerkzeugs 7 ist noch geöffnet.

In Figur 3b ist der zylindrische Rohrabschnitt in die Werkzeugkavität 6 eingelegt und der Werkzeugbestandteil, durch den später der elastomere Werkstoff in die Werkzeugkavität 6 eingepresst wird, wird in Richtung des in der Werkzeugkavität 6 angeordneten Rohrabschnitts 5 bewegt.

In Figur 3c ist die Werkzeugkavität 6 geschlossen und der Rohrabschnitt 5 wird durch das geschlossene Herstellungswerkzeug 7 in seiner Position gehalten. Wie bereits in dieser Figur zu erkennen ist, unterteilt der Rohrabschnitt 5 die Wekzeugkavität 6 in radialer Richtung in einen Gleitring-Hohlraum 8, hier links vom Rohrabschnitt 5 und in einen Dichtring-Hohlraum 9, hier rechts vom Rohrabschnitt 5 dargestellt.

In Figur 3d wird der elastomere Werkstoff, aus dem der Dichtring 1 bestehen wird, durch den Anguss des Herstellungswerkzeugs 7 in die Werkzeugkavität 6 gepresst.

In Figur 3e wird das Einpressen, des elastomeren Werkstoffs des Dichtrings 1 in den Dichtring-Hohlraum 9 fortgesetzt, wobei, wie hier dargestellt, der Dichtring-Hohlraum 9 vollständig mit dem elastomeren Werkstoff gefüllt ist.

In Figur 3f wird weiterhin elastomerer Werkstoff in die Werkzeugkavität 6 eingepresst, wobei nun der bisher zylindrische Rohrabschnitt 5 radial in den Gleitring-Hohlraum 8 umgeformt wird. Der elastomere Werkstoff, aus dem der Dichtring 1 besteht, wird solange in die Werkzeugkavität 6 eingepresst, bis der Rohrabschnitt 5 die den Gleitring-Hohlraum 8 begrenzende Wandung 12 der Werkzeugkavität 6 anliegend berührt.

In Figur 3g ist der zweite Verfahrensschritt abgeschlossen. Der Einpressvorgang des elastomeren Werkstoffs des Dichtrings 1 in die Werzeugkavität 6 ist abgeschlossen.

In den Figuren 3h bis 3j wird die Dichtung, die aus dem Dichtring 1 und dem Gleitring 2 besteht, die einstückig miteinander augebildet sind, aus dem Herstellungswerkzeug 7 entformt.

In Figur 3j ist die entformte Dichtung gezeigt.

In Figur 4 ist das erfindungsgemäße Verfahren zur praktisch gleichzeitigen Herstellung von mehreren Dichtungen in einem gemeinsamen Werkzeug in schematischer Darstellung gezeigt.

Mit Ausnahme des, bezogen auf Figur 3, anderen Herstellungswerkzeugs 7, das eine Werkzeugkavität 6 mit mehreren Teilkavitäten 6.1, 6.2, ... umfasst und mit Ausnahme eines vierten Verfahrensschritts, in dem die herstellungsbedingt zusammenhängenden Dichtungen voneinander getrennt werden, verläuft das erfindungsgemäße Verfahren im Wesentlichen wie das in Figur 3 beschriebene Verfahren.

In einem ersten Verfahrensschritt wird ein zylindrischer Rohrabschnitt 5 aus dem polymeren Werkstoff des Gleitrings 2 in die Werkzeugkavität 6 eines Herstellungswerkzeugs 7 eingelegt und in seiner Position gehalten. Die Werkzeugkavität weist der Anzahl der herzustellenden Dichtungen entsprechende, axial benachbart zueinander angeordnete und strömungsleitend miteinander verbundene Teilkavitäten 6.1, 6.2, ... auf, wobei der Rohrabschnitt 5 alle Teilkavitäten 6.1, 6.2, ... jeweils in radialer Richtung in einen Gleitring-Hohlraum 8 und in einen Dichtring-Hohlraum 9 unterteilt, die einander in radialer Richtung benachbart zugeordnet sind. Der Rohrabschnitt 5 weist eine axiale Breite 10 auf, die im Wesentlichen der axialen Weite 11 der Werkzeugkavität 6 und der Summe der axialen Breite 4 aller in den Teilkavitäten 6.1, 6,2, ... herzustellenden Dichtungen entspricht. In einem zweiten Verfahrensschritt wird elastomerer Werkstoff in die Dichtring-Hohlräume 9 eingepresst, derart, dass der elastomere Werkstoff die Dichtring-Hohlräume 9 vollständig ausfüllt und den Rohrabschnitt 5 radial in die Gleitring-Hohlräume 8 umformt, bis der Rohrabschnitt 5 die die Gleitring-Hohlräume 8 begrenzenden Wandungen 12 anliegend berührt. Die herstellungsbedingt nach dem zweiten Verfahrensschritt noch zusammenhängenden Dichtungen werden anschließend in einem dritten Verfahrensschritt gemeinsam aus dem Herstellungswerkzeug 7 entformt und in einem vierten Verfahrensschritt voneinander getrennt.

In Figur 4 a ist nur ein zylindrischer Rohrabschnitt 5 gezeigt, der im hier gezeigten Ausführungsbeispiel aus PTFE besteht und der später die Gleitringe 2 der erfindungsgemäßen Dichtungen bildet. Die Teilkavitäten 6.1, 6.2, ... der Werkzeugkavität 6 des Herstellungswerkzeugs 7 sind noch geöffnet.

In Figur 4b ist der zylindrische Rohrabschnitt in die Werkzeugkavität 6 eingelegt und der Werkzeugbestandteil, durch den später der elastomere Werkstoff in einem Verfahrensschritt praktisch gleichzeitig in alle Teilkavitäten 6.1, 6.2, ... der Werkzeugkavität 6 eingepresst wird, wird in Richtung des in der Werkzeugkavität 6 angeordneten Rohrabschnitts 5 bewegt.

In Figur 4c ist die Werkzeugkavität 6 geschlossen und der Rohrabschnitt 5 wird durch das geschlossene Herstellungswerkzeug 7 in seiner Position gehalten. Wie bereits in dieser Figur zu erkennen ist, unterteilt der Rohrabschnitt 5 die Teilkavitäten 6.1, 6.2, ... der Werkzeugkavität 6 in radialer Richtung jeweils in einen Gleitring-Hohlraum 8, hier links vom Rohrabschnitt 5 und jeweils in einen Dichtring-Hohlraum 9, hier rechts vom Rohrabschnitt 5 dargestellt.

In Figur 4d wird der elastomere Werkstoff, aus dem die Dichtringe 1 bestehen werden, durch den Anguss des Herstellungswerkzeugs 7 in die Teilkavitäten 6.1, 6.2, ... der Werkzeugkavität 6 gepresst.

In Figur 4e wird das Einpressen des elastomeren Werkstoffs der Dichtringe 1 in die Dichtring-Hohlräume 9 fortgesetzt, wobei, wie hier dargestellt, die Dichtring-Hohlräume 9 vollständig mit dem elastomeren Werkstoff gefüllt sind.

In Figur 4f wird weiterhin elastomerer Werkstoff in die Teilkavitäten 6.1, 6.2, ... der Werkzeugkavität 6 eingepresst, wobei nun der bisher zylindrische Rohrabschnitt 5 radial in die Gleitring-Hohlräume 8 umgeformt wird. Der elastomere Werkstoff, aus dem die Dichtringe 1 bestehen, wird solange in die Teilkavitäten 6.1, 6.2, ... der Werkzeugkavität 6 eingepresst, bis der Rohrabschnitt 5 die die Gleitring-Hohlräume 8 begrenzenden Wandungen 12 der Teilkavitäten 6.1, 6.2, ... der Werkzeugkavität 6 anliegend berührt.

In Figur 4g ist der zweite Verfahrensschritt abgeschlossen. Der Einpressvorgang des elastomeren Werkstoffs der Dichtringe 1 in die Teilkavitäten 6.1, 6.2, ... der Werkzeugkavität 6 ist abgeschlossen.

In den Figuren 4h bis 4 j werden die herstellungsbedingt noch zusammenhängenden Dichtungen, die aus den Dichtringen 1 und den Gleitringen 2 bestehen, die jeweils einstückig miteinander ausgebildet sind, aus dem Herstellungswerkzeug 7 entformt.

In Figur 4k sind die entformten erfindungsgemäßen Dichtungen gezeigt, nachdem die Dichtungen im vierten Verfahrensschritt voneinander getrennt wurden, bevorzugt durch Laserschneiden.

## Patentansprüche

1. Verfahren zur Herstellung mehrerer Dichtungen in einem gemeinsamen Werkzeug, wobei jede Dichtung einen Dichtring (1) und einen Gleitring (2) umfasst, wobei der Gleitring (2) auf der einer abzudichtenden Fläche zugewandten Seite des Dichtrings (1) angeordnet ist und wobei der Dichtring (1) und der Gleitring (2) einstückig ausgebildet sind, **dadurch gekennzeichnet, dass** in einem ersten Verfahrensschritt ein zylindrischer Rohrabschnitt (5) aus dem polymeren Werkstoff des Gleitrings (2) in die Werkzeugkavität (6) eines Herstellungswerkzeugs (7) eingelegt und in seiner Position gehalten wird, wobei die Werkzeugkavität der Anzahl der herzustellenden Dichtungen entsprechende, axial benachbart zueinander angeordnete und strömungsleitend miteinander verbundene Teilkavitäten (6.1, 6.2, ...) aufweist, wobei der Rohrabschnitt (5) alle Teilkavitäten (6.1, 6.2, ...) jeweils in radialer Richtung in einen Gleitring-Hohlraum (8) und in einen Dichtring-Hohlraum (9) unterteilt, die einander in radialer Richtung benachbart zugeordnet sind, wobei der Rohrabschnitt (5) eine axiale Breite (10) aufweist, die im Wesentlichen der axialen Weite (11) der Werkzeugkavität (6) und der Summe der axialen Breite (4) aller in den Teilkavitäten (6.1, 6,2, ...) herzustellenden Dichtungen entspricht, dass in einem zweiten Verfahrensschritt elastomerer Werkstoff in die Dichtring-Hohlräume (9) eingepresst wird, derart, dass der elastomere Werkstoff die Dichtring-Hohlräume (9) vollständig ausfüllt und den Rohrabschnitt (5) radial in die Gleitring-Hohlräume (8) umformt, bis der Rohrabschnitt (5) die die Gleitring-Hohlräume (8) begrenzenden Wandungen (12) anliegend berührt, dass die herstellungsbedingt nach dem zweiten Verfahrensschritt noch zusammenhängenden Dichtungen anschließend in einem dritten Verfahrensschritt gemeinsam aus dem Herstellungswerkzeug (7) entformt und in einem vierten Verfahrensschritt voneinander getrennt werden.

2. Verfahren nach Anspruch 1, **dadurch gekennzeichnet, dass** die Dichtungen im vierten Verfahrensschritt durch Schneiden voneinander getrennt werden.

3. Verfahren nach Anspruch 2, **dadurch gekennzeichnet, dass** die Dichtungen im vierten Verfahrensschritt durch Laserschneiden voneinander getrennt werden.

4. Verfahren nach einem der Ansprüche 1 bis 3, **dadurch gekennzeichnet, dass** zwischen dem dritten und dem vierten Verfahrensschritt auf der dem Dichtring (1) abgewandten Seite des Gleitrings (2) eine reibungsverringernde Oberflächenprofilierung und/oder Oberflächenbeschichtung aufgebracht wird.

## Claims

1. Method for the manufacture of a plurality of seals in a common mould, wherein each seal comprises a sealing ring (1) and a sliding ring (2), wherein the sliding ring (2) is arranged on that side of the sealing ring (1) which faces a surface to be sealed, and wherein the sealing ring (1) and the sliding ring (2) are formed as a single piece, **characterized in that**, in a first method step, a cylindrical tube section (5) made from the polymeric material of the sliding ring (2) is placed into the mould cavity (6) of a manufacturing mould (7) and held in its position, wherein the mould cavity has partial cavities (6.1, 6.2,...) which correspond to the number of seals to be produced, are arranged axially adjacent to one another and are connected in a flow-conducting manner to one another, wherein the tube section (5) divides all of the partial cavities (6.1, 6.2,...) in the radial direction in each case into a sliding ring hollow space (8) and into a sealing ring hollow space (9), which hollow spaces are assigned to each other adjacently in the radial direction, wherein the tube section (5) has an axial width (10) which substantially corresponds to the axial extent (11) of the mould cavity (6) and the sum of the axial width (4) of all of the seals to be manufactured in the partial cavities (6.1, 6.2,...), **in that**, in a second method step, elastomeric material is pressed into the sealing ring hollow spaces (9) in such a manner that the elastomeric material completely fills the sealing ring hollow spaces (9) and deforms the tube section (5) radially into the sliding ring hollow spaces (8) until the tube section (5) comes into contact in a close-fitting manner with the walls (12) bounding the sliding ring hollow spaces (8), **in that**, subsequently, in a third method step, the seals which are still joined together after the second method step because of the manufacturing process are removed together from the manufacturing mould (7) and, in a fourth method step, are separated from one another.

2. Method according to Claim 1, **characterized in that**, in the fourth method step, the seals are separated from one another by cutting.

3. Method according to Claim 2, **characterized in that**, in the fourth method step, the seals are separated from one another by laser cutting.

4. Method according to one of Claims 1 to 3, **characterized in that**, between the third and the fourth method step, a friction-reducing surface profiling and/or surface coating is applied to that side of the sliding ring (2) which faces away from the sealing ring (1).

## Revendications

1. Procédé de fabrication de plusieurs garnitures d'étanchéité dans un outil commun, chaque garniture d'étanchéité comprenant une bague d'étanchéité (1) et un anneau glissant (2), l'anneau glissant (2) étant disposé le côté de la bague d'étanchéité (1) qui fait face à une surface à rendre étanche et la bague d'étanchéité (1) et l'anneau glissant (2) étant formés d'un seul tenant, **caractérisé en ce que** dans une première étape du procédé, une portion de tube (5) cylindrique en el matériau polymère de l'anneau glissant (2) est inséré dans la cavité d'outil (6) d'un outil de fabrication (7) et maintenu dans sa position, la cavité d'outil possédant des cavités partielles (6.1, 6.2, ...) correspondant au nombre de garnitures d'étanchéité à fabriquer, disposées les unes à côté des autres dans le sens axial et reliées en conduction fluidique les unes aux autres, la portion de tube (5) divisant toutes les cavités partielles (6.1, 6.2, ...) respectivement dans la direction radiale en un espace creux d'anneau glissant (8) et en un espace creux de bague d'étanchéité (9), lesquels sont disposés les uns à côté des autres dans le sens radial, la portion de tube (5) possédant une largeur axiale (10) qui correspond sensiblement à l'ampleur axiale (11) de la cavité d'outil (6) et à la somme des largeurs axiales (4) de toutes les garnitures d'étanchéité à fabriquer dans les cavités partielles (6.1, 6.2, ...), **en ce que** dans une deuxième étape du procédé un matériau élastomère est injecté sous pression dans les espace creux de bague d'étanchéité (9), de telle sorte que le matériau élastomère remplit entièrement les espace creux de bague d'étanchéité (9) et déforme la portion de tube (5) dans le sens radial dans les espace creux d'anneau glissant (8) jusqu'à ce que la portion de tube (5) entre en contact avec les parois (12) qui délimitent les espace creux d'anneau glissant (8) en reposant contre celles-ci, **en ce que** les garnitures d'étanchéité qui sont encore attachées ensemble après la deuxième étape du procédé du fait de la fabrication sont démoulées ensemble de l'outil de fabrication (7) dans une troisième étape du procédé puis sont séparées les unes des autres dans une quatrième étape du procédé.

2. Procédé selon la revendication 1, **caractérisé en ce que** dans la quatrième étape du procédé, les garnitures d'étanchéité sont séparées les unes des autres par découpe.

3. Procédé selon la revendication 2, **caractérisé en ce que** dans la quatrième étape du procédé, les garnitures d'étanchéité sont séparées les unes des autres par découpe au laser.

4. Procédé selon l'une des revendications 1 à 3, **caractérisé en ce qu'**un profilage de surface et/ou un revêtement de surface réduisant la friction est appliqué entre la troisième et la quatrième étape du procédé sur le côté de l'anneau glissant (2) à l'opposé de la bague d'étanchéité (1).
